# EUROPEAN PATENT SPECIFICATION

(11) **EP 3 339 166 B1**
(45) Date of publication and mention of the grant of the patent: **30.10.2019**
(21) Application number: 16382634.0
(22) Date of filing: 21.12.2016
(51) Int. Cl.: B64C 21/00, B64D 29/04, B64D 33/02, B64C 1/00, B64D 27/14, B64D 27/20

(54) **AIRCRAFT WITH A VARIABLE FUSELAGE SURFACE FOR BOUNDARY LAYER OPTIMIZATION**
FLUGZEUG MIT VARIABLER RUMPFFLÄCHE FÜR GRENZSCHICHTOPTIMIERUNG
AÉRONEF AYANT UNE SURFACE DE FUSELAGE VARIABLE POUR L'OPTIMISATION DE LA COUCHE LIMITE

(43) Date of publication of application: 27.06.2018
(73) Proprietor: Airbus Operations, S.L., 28906 Getafe Madrid (ES)
(72) Inventor: ARANA HIDALGO, Alberto, 28906 Getafe (ES); LLAMAS SANDÍN, Raúl Carlos, 28906 Getafe (ES); VÁZQUEZ CASTRO, Jesús Javier, 28906 Getafe (ES)
(74) Representative: Elzaburu S.L.P.

(56) References cited:
- EP-A1- 2 987 987
- WO-A1-2011/059571
- WO-A2-2014/006422
- FR-A1- 3 001 709
- GB-A- 800 380
- US-A- 5 033 693
- US-A- 5 337 975
- US-A1- 2011 163 207
- US-A1- 2015 122 952
- US-B1- 6 231 006
- US-B1- 6 616 092
- US-B1- 8 690 097
- US-B2- 7 516 918

## Description

### FIELD OF THE INVENTION

The present invention relates to aircraft with engines arranged to ingest boundary layer air and more particularly to aircraft with engines attached directly to the aircraft fuselage.

### BACKGROUND OF THE INVENTION

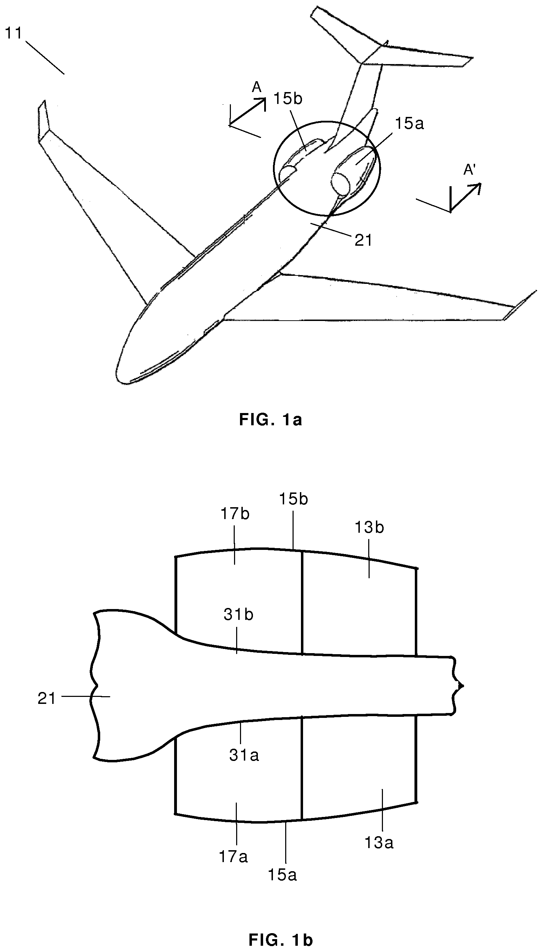

Although the engines of conventional aircraft for passenger or cargo transportation are usually arranged inside nacelles that are joined to the wings or to the fuselage by means of pylons, there are also known aircraft with the engine nacelles partially embedded in the aircraft fuselage such as the aircraft of Figure 1 with two engines located in the rear fuselage.

These aircraft configurations are intended both for eliminating the pylons (what reduces weight and drag) and for housing Boundary Layer Ingestion (BLI) engines.

Partially embedded nacelles allow using BLI engines that can improve the engine efficiency by means of the ingestion of the lower speed boundary layer flow.

One of the problems raised by these aircraft configurations is related with the flow control in the intake conduit of the engines.

In this respect US 2011/0163207 discloses an airplane provided with dual-flow turbojet engines wherein the air intake of each engine is connected to the fuselage by two boundary layer guiding walls, the walls extending towards the upstream side of the air intake and being spaced apart towards the upstream side.

Moreover US 7,784,732 B2 discloses a system for reducing distortion at the aerodynamic interface plane of a boundary-layer-ingesting inlet using a combination of active and passive flow control devices. Active flow control jets and vortex generating vanes are used in combination to reduce distortion across a range of inlet operating conditions. Together, the vortex generating vanes can reduce most of the inlet distortion and the active flow control jets can be used at a significantly reduced control jet mass flow rate to make sure the inlet distortion stays low as the inlet mass flow rate varies.

The present invention is also addressed to improve the flow control in the intake conduit but focusing the problem from a different perspective.

It is known document US2015/122952 disclosing a gas turbine engine having an inlet duct formed to have a shape with a first ellipse in one half and a second ellipse in a second half. The second half has an upstream most end which is smaller than the first ellipse. The inlet duct has a surface defining the second ellipse which curves away from the first ellipse, such that the second ellipse is larger at an intermediate location. The second ellipse is even larger at a downstream end of the inlet duct leading into a fan.

It is also known document US6231006 disclosing a mission adaptive inlet for an aircraft having a rigid lip panel pivotally attached to an inlet of the aircraft. An actuation mechanism is coupled to the rigid lip panel and causes the rigid lip panel to pivot from a first position to a second position. A reinforced elastomer system is connected the rigid lip panel and the inlet.

They are also known documents US7516918, WO2011/059571, WO2014/006422, GB800380 and EP2987987 disclosing various implementations of morphing skins that include flexible and rigid parts.

### SUMMARY OF THE INVENTION

The invention refers to an aircraft defined by the independent claim and comprising a propulsion system formed by engines arranged to ingest boundary layer air. These engines are placed inside of nacelles partially embedded in the aircraft fuselage and, thus, their intake conduits are delimited by specific fuselage areas and the nacelles.

For said specific fuselage areas, the invention provides skins with a flexible portion and actuation systems over them for changing their surfaces to adapt them to the needs of the propulsion system. In other words, the invention provides a variable range of performance to the air current used for the boundary layer ingestion engine.

According to the invention the skins comprise inner flexible portions, such as membranes made of an elastomeric material or a composite material, attached to surrounding rigid portions which are joined to inner structural elements of said specific fuselage areas.

According to the invention said inner flexible portions have a semi-rigid grid embedded into them, being some of their nodes the points to be actuated by the actuation systems.

According to the invention the actuation systems comprise linear actuators supported by the inner structural elements and connected with some nodes of the inner flexible portions of the skins. Other desirable features and advantages of the invention will become apparent from the subsequent detailed description of the invention and the appended claims, in relation with the enclosed drawings.

### BRIEF DESCRIPTION OF THE DRAWINGS

Figure 1a is a schematic perspective view of an aircraft with two engines placed inside of a nacelle partially embedded in the rear fuselage.
Figure 1b is a plan schematic view of the circled area of Figure 1a.
Figure 2 is a schematic sectional view by the plane A-A' of Figure 1a corresponding to a known aircraft.
Figure 3 is a schematic sectional views by the plane A-A' of Figure 1a corresponding to an aircraft according to the invention.
Figures 4a and 4b are separated schematic perspective views of the rigid and flexible portions of the skin of the fuselage area belonging to the intake conduit of an engine in an embodiment of the invention.
Figures 5a, 5b and 5c are schematic perspective views of the skin of a fuselage area belonging to the intake conduit of an engine illustrating three different states of the surface of its flexible portion.

### DETAILED DESCRIPTION OF THE INVENTION

Figure 1a and Figure 1b show an aircraft 11 with a propulsion system formed by engines 13a, 13b placed inside nacelles 15a, 15b, partially embedded in an aircraft fuselage 21 and arranged to ingest boundary layer air.

In known aircraft (see Figure 1b) the engines 13a, 13b receive the incoming air through intake conduits 17a, 17b delimited by the nacelles 15a, 15b and the areas 31a, 31b of the aircraft fuselage 21.

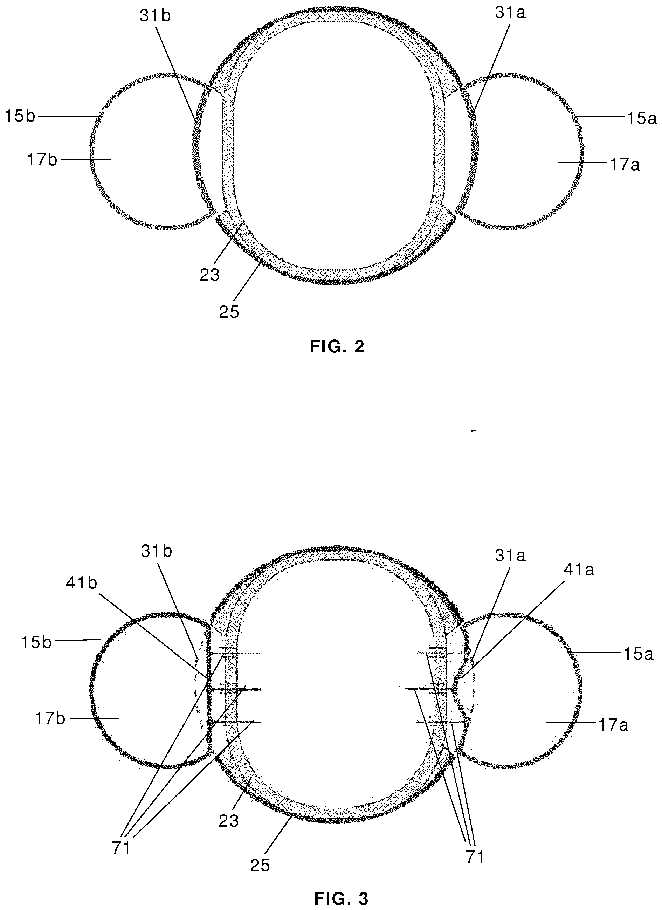

In aircraft with conventional fuselage structures such as frames 23 and a rigid skin 25 (see Figure 2), the shape of the fuselage areas 31a, 31b belonging to the intake conduits 17a, 17b conditions the performance of the engines 13a, 13b, placed inside the nacelles 15a, 15b.

According to the invention illustrated in Figures 3-5c, in the section corresponding to said fuselage areas 31a, 31b, the aircraft fuselage 21, comprises inner structural elements 23, 24 (typically frames and beams/stiffeners), skins 41a, 41b with inner flexible portions 43a, 43b attached to surrounding rigid portions 45a, 45b joined to the inner structural elements 23, 24 and actuation systems over the flexible portions 43a, 43b of the skins 41a, 41b to change the surface of the fuselage areas 31a, 31a to adapt them to the needs of the propulsion system. In this respect Figure 3 shows the left skin 41b in a situation where its actuation system is inactive and the right skin 41a in a situation where its actuation system is active.

These needs may refer to an adaptation of the fuselage areas 31a, 31b to new engines with different features than the previous engines housed in nacelles 15a, 15b, to desired modifications of the geometry of the intake conduits 17a, 17b or to different engine regime points during a mission.

If the skin of the fuselage areas 31a, 31b is a rigid skin it can only be optimum for a specific engine, intake and engine regime.

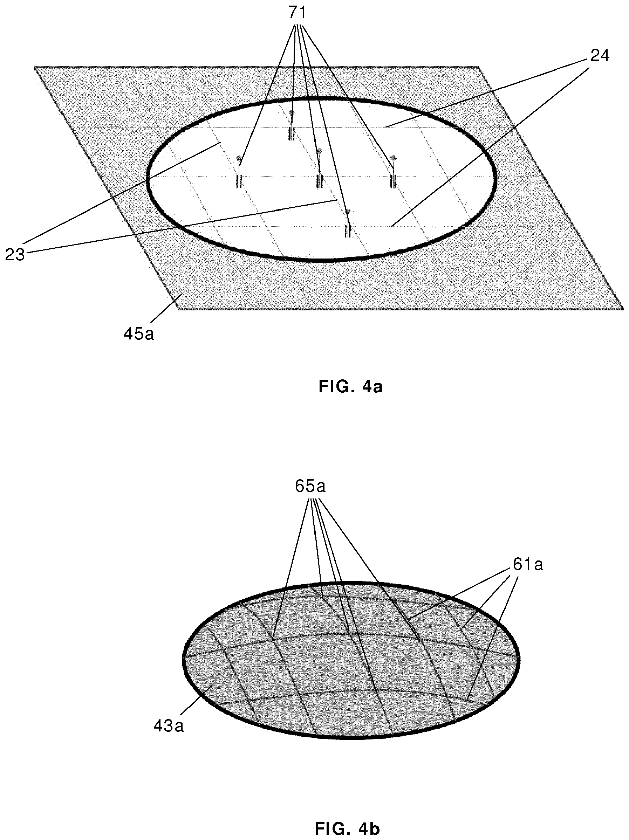

According to the invention the inner flexible portions 43a, 43b of the skins 41a, 41b have a semi-rigid grid 61a, 61b embedded into them with some of their nodes 65a, 65b being configured as the points to be actuated by actuation systems comprising linear actuators 71 supported in the inner structural elements 23, 24 (see particularly Figures 4a-4b).

In an embodiment the inner flexible portions 43a, 43b of skins 41a, 41b are membranes made of an elastomeric material.

In another embodiment the inner flexible portions 43a, 43b of skins 41a, 41b are membranes made of a composite material such as CFRP (if thin enough) to maintain the equilibrium between being deformable upon the actuation system but do not vibrate under normal air ingestion conditions to do not introduce perturbations on the inflow of air.

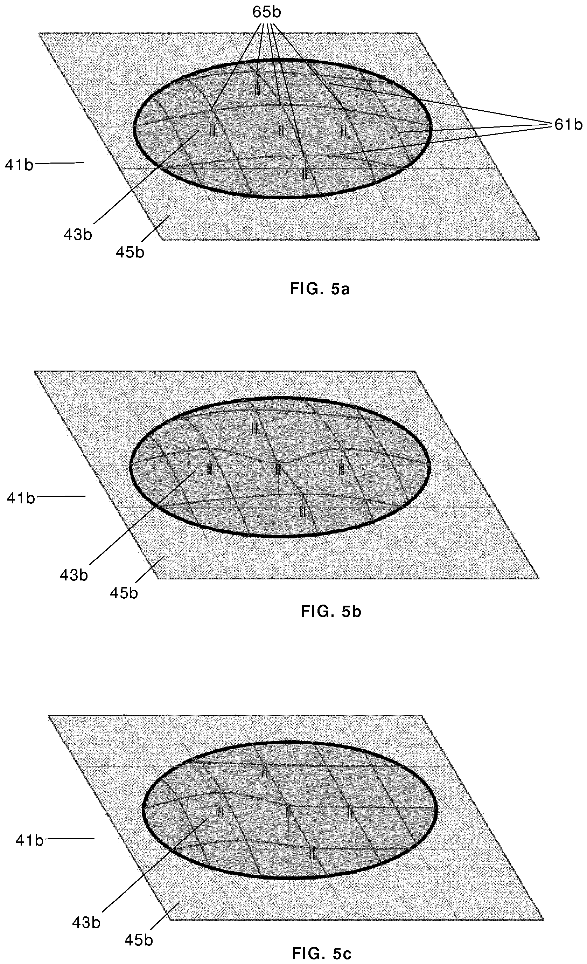

The actuation systems are configured with the linear actuators 71 connected with some nodes 65a, 65b of the semi-rigid grid 61a, 61b of the flexible portions 43a, 43b of skins 41a, 41b and arranged to move forwards or backwards to allow different configurations of said flexible portions 43a, 43b as shown, particularly, in Figures 5a-5c to adapt them to the needs of the propulsion system.

In the state illustrated in Figure 5a all linear actuators 71 are moved forwards so that the flexible portion 43b has a dome shape.

In the state illustrated in Figure 5b four linear actuators 71 are moved forwards and the central lineal actuator is moved backwards to configure the flexible portion 43b with a central depression.

In the state illustrated in Figure 5c only one linear actuator 71 is moved forwards to configure the flexible portion 43b with a bulb in the left side.

Although the present invention has been described in connection with various embodiments, it will be appreciated from the specification that various combinations of elements, variations or improvements therein may be made, and are within the scope of the invention as defined by the appended claims.

## Claims

1. Aircraft (11) comprising a propulsion system formed by engines (13a, 13b) arranged in a location on the aircraft so as to, in use, ingest boundary layer air; the engines (13a, 13b) being placed inside of nacelles (15a, 15b), the engines (13 a, 13b) being partially embedded in the aircraft fuselage (21); the intake conduits (17a, 17b) of the engines (13a, 13b) each being delimited perimetrically in a section perpendicular to the longitudinal axis of the aircraft (11) by a fuselage area (31a, 31b) and the nacelle (15a, 15b); wherein, in the fuselage sections corresponding to said fuselage areas (31a, 31b), the aircraft (11) comprises rigid inner structural elements (23, 24) and skins (41a, 41b), the skins (41a, 41b) comprising rigid portions (45a, 45b) joined to the inner structural elements (23, 24);
**characterised in that**:
- the skins (41a, 41b) further comprise inner flexible portions (43a, 43b), capable of being deformed, in said fuselage areas (31a, 31b) and attached to surrounding rigid portions (45a, 45b);
- the aircraft further comprises actuation systems (71) for changing the surfaces of the flexible portions (43a, 43b) of the skins (41a, 41b) to adapt them to the needs of the propulsion system,
wherein the inner flexible portions (43a, 43b) of the skins (41a, 41b) have a semi-rigid grid (61a, 61b) defining nodes (65a, 65b) and embedded into the inner flexible portions (43a, 43b), being some of the nodes (65a, 65b) the points to be actuated by the actuation systems, and
wherein the actuation systems comprise linear actuators (71) supported by the inner structural elements (23, 24) and connected with said some of the nodes (65a, 65b) of the inner flexible portions (43a, 43b) of the skins (41a, 41b) so as to be capable of moving said some of the nodes (65a, 65b) to thereby modify the configuration of the inner flexible portions (43a, 43b).

2. Aircraft (11) according to claim 1, wherein the flexible portions (43a, 43b) of the skins (41a, 41b) are membranes made of an elastomeric material.

3. Aircraft (11) according to claim 2, wherein the flexible portions (43a, 43b) of the skins (41a, 41b) are membranes made of a composite material.

4. Aircraft (11) according to any of claims 1-3, wherein the engines (13a, 13b) housed in the nacelles (15a, 15b) are located in the rear fuselage.

## Patentansprüche

1. Flugzeug (11), das ein Antriebssystem aus Motoren (13a, 13b), die an einer Stelle des Flugzeugs angeordnet sind, an der sie bei Verwendung die Grenzschicht Luft aufnehmen, umfasst; wobei die Motoren (13a, 13b) in Gondeln (15a, 15b) platziert sind, wobei die Motoren (13a, 13b) teilweise in dem Flugzeugrumpf (21) eingebettet sind; wobei die Ansaugleitungen (17a, 17b) der Motoren (13a, 13b) jeweils am Umfang in einem Abschnitt rechtwinklig zur Längsachse des Flugzeugs (11) von einem Rumpfbereich (31a, 31b) und der Gondel (15a, 15b) begrenzt sind; wobei in den Rumpfabschnitten, die den Rumpfbereichen (31a, 31b) entsprechen, das Flugzeug (11) starre innere Bauelemente (23, 24) und Häute (41a, 41b) umfasst, wobei die Häute (41a, 41b) starre Teile (45a, 45b) umfassen, die mit den inneren Bauteilen (23, 24) zusammengefügt sind;
**dadurch gekennzeichnet, dass**
die Häute (41a, 41b) ferner innere flexible Teile (43a, 43b) in den Rumpfbereichen (31a, 31b) umfassen, die verformbar sind und an umgebenden starren Teilen (45a, 4b) angebracht sind;
das Flugzeug ferner Betätigungssysteme (71) zum Verändern der Flächen der flexiblen Teile (43a, 43b) der Häute (41a, 41b) zum Anpassen derselben an die Anforderungen des Antriebssystems umfasst,
wobei die inneren flexiblen Teile (43a, 43b) der Häute (41a, 41b) ein halbstarres Gitter (61a, 61b) aufweisen, die Knotenpunkte (65a, 65b) bilden und in die inneren flexiblen Teile (43a, 43b) eingebettet sind, wobei einige der Knotenpunkte (65a, 65b) die durch die Betätigungssysteme zu betätigenden Punkte sind, und
wobei die Betätigungssysteme lineare Aktuatoren (71) umfassen, die von den inneren Bauelementen (23, 24) gehalten werden und mit einigen der Knotenpunkte (65a, 65b) der inneren flexiblen Teile (43a, 43b) der Häute (41a, 41b) verbunden sind, um in der Lage zu sein, einige der Knotenpunkte (65a, 65b) zu bewegen, um dadurch die Konfiguration der flexiblen inneren Teile (43a, 43b) zu modifizieren.

2. Flugzeug (11) nach Anspruch 1, bei dem die flexiblen Teile (43a, 43b) der Häute (41a, 41b) Membranen sind, die aus einem elastomeren Material gefertigt sind.

3. Flugzeug (11) nach Anspruch 2, bei dem die flexiblen Teile (43a, 43b) der Häute (41a, 41b) Membranen sind, die aus einem Verbundmaterial gefertigt sind.

4. Flugzeug (11) nach einem der Ansprüche 1-3, bei dem die in den Gondeln (15a, 15b) aufgenommenen Motoren (13a, 13b) im hinteren Rumpfteil angeordnet sind.

## Revendications

1. Aéronef (11) comprenant un système de propulsion formé par des moteurs (13a, 13b) agencés dans un emplacement sur l'aéronef de manière à, lors de l'utilisation, ingérer l'air de la couche limite ; les moteurs (13a, 13b) étant placés à l'intérieur de nacelles (15a, 15b), les moteurs (13a, 13b) étant partiellement incorporés dans le fuselage d'aéronef (21) ; les conduits d'admission (17a, 17b) des moteurs (13a, 13b) étant chacun délimité de façon périmétrique dans une section perpendiculaire à l'axe longitudinal de l'aéronef (11) par une zone de fuselage (31a, 31b) et la nacelle (15a, 15b) ; dans lequel, dans les sections de fuselage correspondant auxdites zones de fuselage (31a, 31b), l'aéronef (11) comprend des éléments structuraux intérieurs rigides (23, 24) et des revêtements (41a, 41b), les revêtements (41a, 41b) comprenant des parties rigides (45a, 45b) reliées aux éléments structuraux intérieurs (23, 24) ;
**caractérisé en ce que** :
- les revêtements (41a, 41b) comprennent en outre des parties flexibles intérieures (43a, 43b), aptes a être déformées, dans lesdites zones de fuselage (31a, 31b) et attachées à des parties rigides environnantes (45a, 45b) ;
- l'aéronef comprend en outre des systèmes d'actionnement (71) pour changer les surfaces des parties flexibles (43a, 43b) des revêtements (41a, 41b) pour les adapter aux besoins du système de propulsion, dans lequel les parties flexibles intérieures (43a, 43b) des revêtements (41a, 41b) comportent une grille semi-rigide (61a, 61b) définissant des nœuds (65a, 65b) et incorporée dans les parties flexibles intérieures (43a, 43b), certains des nœuds (65a, 65b) étant les points à actionner par les systèmes d'actionnement, et
dans lequel les systèmes d'actionnement comprennent des actionneurs linéaires (71) supportés par les éléments structuraux intérieurs (23, 24) et raccordés auxdits certains des nœuds (65a, 65b) des parties flexibles intérieures (43a, 43b) des revêtements (41a, 41b) de manière à être capables de déplacer lesdits certains des nœuds (65a, 65b) pour ainsi modifier la configuration des parties flexibles intérieures (43a, 43b).

2. Aéronef (11) selon la revendication 1, dans lequel les parties flexibles (43a, 43b) des revêtements (41a, 41b) sont des membranes composées d'un matériau élastomère.

3. Aéronef (11) selon la revendication 2, dans lequel les parties flexibles (43a, 43b) des revêtements (41a, 41b) sont des membranes composées d'un matériau composite.

4. Aéronef (11) selon l'une quelconque des revendications 1 à 3, dans lequel les moteurs (13a, 13b) logés dans les nacelles (15a, 15b) sont situés dans le fuselage arrière.
